**Europäisches Patentamt**

**European Patent Office**

**Office européen des brevets**

(19)

(11) Veröffentlichungsnummer : **0 362 131 B1**

(12) **EUROPÄISCHE PATENTSCHRIFT**

(45) Veröffentlichungstag der Patentschrift :
**15.04.92 Patentblatt 92/16**

(51) Int. Cl.$^5$ : **F16D 65/06**

(21) Anmeldenummer : **89810666.1**

(22) Anmeldetag : **07.09.89**

(54) Bremsklotzsohle und Verfahren zu deren Herstellung.

(30) Priorität : **22.09.88 CH 3530/88**

(43) Veröffentlichungstag der Anmeldung :
**04.04.90 Patentblatt 90/14**

(45) Bekanntmachung des Hinweises auf die
Patenterteilung :
**15.04.92 Patentblatt 92/16**

(84) Benannte Vertragsstaaten :
**BE CH DE ES FR GB LI**

(56) Entgegenhaltungen :
**EP-A- 0 026 578**
**CH-A- 248 674**
**CH-A- 301 328**
**FR-A- 791 041**

(56) Entgegenhaltungen :
**FR-A- 989 079**
**GB-A- 255 218**
**GB-A- 403 014**
**US-A- 2 392 291**

(73) Patentinhaber : **Maschinenfabrik &**
**Eisengiesserei Ed. Mezger AG.**
**Fabrikstrasse 300**
**CH-3283 Kallnach (CH)**

(72) Erfinder : **Mezger, Fritz**
**Strandweg**
**CH-3280 Muntelier (CH)**

(74) Vertreter : **Steiner, Martin et al**
**c/o AMMANN PATENTANWÄLTE AG BERN**
**Schwarztorstrasse 31**
**CH-3001 Bern (CH)**

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 362 131 B1

## Beschreibung

Die vorliegende Erfindung betrifft eine Bremsklotzsohle, im Folgenden Bremssohle genannt, mit einem Rücken zur Verbindung mit einem Halter und einem mit dem Rücken verbundenen Bremskörper aus Gusseisen mit hohem Reibungskoeffizienten. Solche Bremssohlen sind bekannt und werden insbesondere für die Bremsen an Lokomotiven und Eisenbahnwagen verwendet. Für den Bremskörper wird heute oft ein hoch P-haltiges Gusseisen bevorzugt, da dieses verschiedene Vorteile bezüglich Reibungskoeffizient und Verschleissfestigkeit aufweist. Nachteilig ist jedoch die geringe Festigkeit dieses Gusseisens, was eine starke Armierung erforderlich macht, welche einerseits den Bruch erschweren und andererseits, nach eingetretenem Bruch, die einzelnen Bruchstücke zusammenhalten soll, damit nicht Teile davon z.B. in einem Bahnhof herumfliegen und Menschen verletzen können. Eine solche Ausführung ist beispielsweise bekannt aus der EP-A-0 026 578. Die aus dieser Schrift bekannten Bremssohlen weisen einen aus Stahl bestehenden, etwa 3mm starken Rücken mit einer daran befestigten Armierung auf. Diese Ausführung hat verschiedene Nachteile.

Es ist auch bekannt, den Rücken und den Bremskörper als Gussteile auszuführen, die durch ineinandergreifende konische Zapfen bzw. Löcher miteinander verbunden sind (US-A-2 392 291). Beide Gussteile müssen an sich separat gegossen werden, d.h. der eine vorbereitete Gussteil muss in die Form zum Giessen des anderen Gussteils eingelegt werden, was die Herstellung aufwendig macht. Die Verbindung zwischen den beiden Gussteilen ist trotzdem nicht ideal und es besteht keine absolute Gewähr dafür, dass sich nicht doch Bruchstücke des spröden Bremskörpers vom Rücken lösen und abfallen können. Zudem besteht keine eigentliche Verbindung zwischen den beiden Gussteilen, so dass sich bei einem Bruch Teile des spröden Bremskörpers lösen und wegfliegen können.

Der Erfindung liegt die Aufgabe zugrunde, die erwähnten Nachteile zu vermeiden. Die Lösung ist im Anspruch 1 umschrieben.

Dadurch, dass Rücken und Bremskörper direkt oder indirekt verschweisst sind, ergibt sich eine sichere Verbindung und Haftung an der Stossstelle zwischen den beiden Teilen, derart, dass auch kleine Bruchstücke des spröden Bremskörpers sich nicht vom Rücken lösen und abfallen können. Die Herstellung kann, wie noch ausgeführt wird, erheblich vereinfacht und damit verbilligt werden. Eine eventuelle Armierung zwischen Rücken und Bremskörper braucht nur dünn ausgeführt zu werden so dass sie die nutzbare Dicke des Bremskörpers praktisch nicht beschränkt. Wie erwähnt, kann die Verschweissung zwischen Rücken und Bremskörper direkt erfolgen, oder aber es kann ein Stahlblech zwischen diesen Teilen angeordnet sein, mit dem die beiden Teile verschweisst sind.

Das erfindungsgemässe Verfahren ist im Anspruch 9 umschrieben. Damit, dass die Herstellung der ganzen Bremssohle als Verbundguss in aufeinanderfolgenden oder gleichzeitigen Giessvorgängen in derselben Form erfolgt, wird eine besonders wirtschaftliche Herstellung möglich.

Die Erfindung wird nun anhand einiger Beispiele näher erläutert.

Figur 1 ist ein Längsschnitt durch eine erfindungsgemässe Bremssohle,

Figur 2 zeigt ein erstes Beispiel einer Giessform,

Figur 3 zeigt ein zweites Beispiel einer Giessform,

Figur 4 zeigt ein zweites Beispiel einer Bremssohle,

Figur 5 zeigt einen Schnitt nach Linie V/V in Figur 4.

Figur 6 zeigt eine Rückenansicht einer weiteren Ausführungsform der erfindungsgemässen Bremssohle und

Figur 7 zeigt eine Seitenansicht der Bremssohle nach Fig. 6.

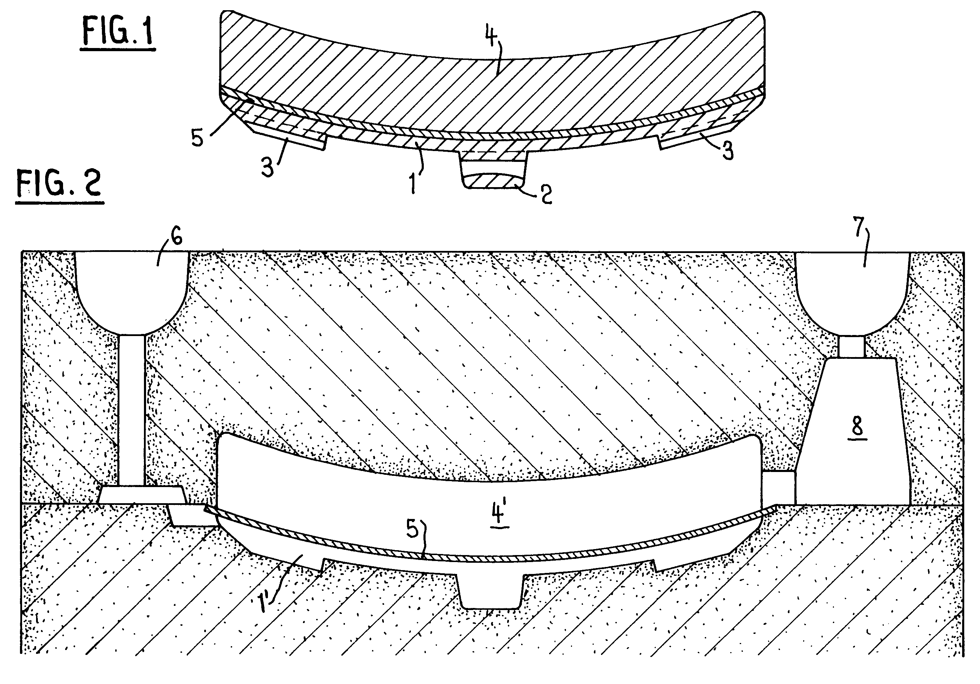

Die Bremssohle gemäss Fig.1 weist einen Rücken 1 aus Gusseisen, beispielsweise unlegiertem Grauguss oder Sphäroguss, mit einem Steg 2 und Nocken 3 zur Befestigung des Rückens bzw. der ganzen Bremssohle an einem Halter der Bremsvorrichtung auf. Die Bremssohle weist ferner einen Bremskörper 4 aus hoch P-haltigem Gusseisen mit guten Bremseigenschaften auf. Die Teile 1 und 4 sind in einer Zone 5 gegenseitig direkt oder indirekt verschweisst. Die Zone 5 ist entstanden aus einem die Teile 1 und 4 beim Giessen trennenden Stahlblech, das jedoch während des Giessvorgangs beidseitig stark aufgekohlt und mit den Gusskörpern 1 und 4 verschweisst worden ist.

Figur 2 zeigt eine Form zur Herstellung der Bremssohle nach Figur 1. Im Formunterteil befindet sich der Formraum 1′ zum Giessen des Rückens, während im Formoberteil der Giessraum 4′ zum Giessen des Bremskörpers 4 vorgesehen ist. Zwischen den beiden Giessräumen befindet sich ein Trennblech 5 aus Stahl, dessen etwas vorstehende Ränder im Sand der beiden Formteile verankert sind und eine sichere Trennung der Formräume ergeben. Der Anschnitt des unteren Formteils liegt unterhalb des Blechs 5, während der Anschnitt des oberen Formteils über dem Blech liegt. Figur 2 zeigt ausserdem die Giesstrichter 6 bzw. 7 sowie den Speiser 8 im oberen Formteil, der dem Giessraum 4′ zugeordnet ist. Wie in Figur 2 angedeutet, ist die Modelltrennung nicht horizontal, sondern verläuft rund, parallel zum Aussenradius und derart, dass das Modellunterteil nur etwa

2

5 bis 10 mm dick ist. Das Trennblech 5 weist eine Dicke von 1 bis 2 mm auf. Nach dem Ausformen der Bremssohle muss der vorstehende Rand des Trennbleches 5 weggeschnitten werden.

Damit das Trennblech 5 nicht vorzustehen braucht, kann das Unter- oder Oberteil etwas schmäler ausgeführt werden. Im übrigen kann die Modelltrennung auch horizontal verlaufen, wenn anstelle eines flachen Trennbleches eine schalen - oder wiegenförmige Stahleinlage mit ebenem Rand verwendet wird.

Das Abgiessen erfolgt in zwei Schritten. Zuerst wird das Unterteil mit der passenden Gusslegierung abgegossen. Kurz danach wird das Oberteil mit dem hoch P-haltigen Eisen abgegossen. Das Abgiessen kann auch praktisch gleichzeitig erfolgen. Dadurch wird erreicht, dass das Trennblech aus Stahl genügend aufgekohlt wird, um eine genügende Verschweissung und gegenseitige Haftung des Unterteils, d.h. des Rückens 1, und des Oberteils, d.h. des Bremskörpers 4 zu erzielen. Es wird damit auch vermieden, dass durch die Stahleinlage Bandageschäden am gebremsten Rad entstehen, sofern die Bremssohle in Ausnahmefällen bis auf die Stahleinlage abgenützt wird.

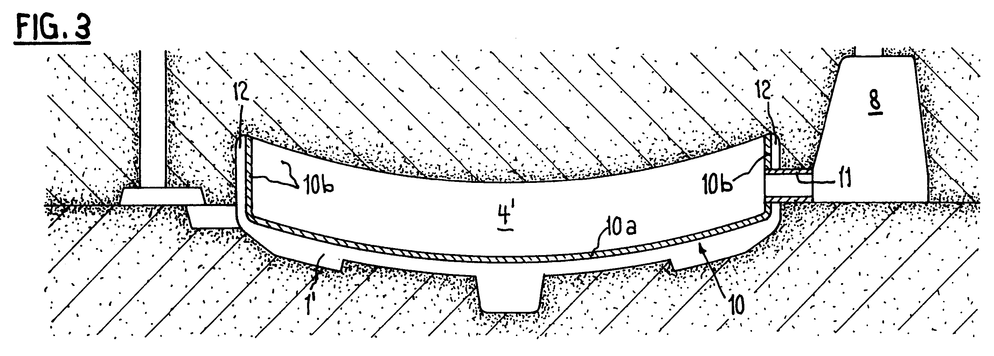

Figur 3 zeigt eine Giessform ähnlich derjenigen nach Figur 2, und entsprechende Teile sind gleich bezeichnet. Anstelle eines flachen Trennblechs 5 gemäss Figur 2, ist jedoch in diesem Falle eine kastenförmige Trennschale 10 mit einem Boden 10a und umlaufenden Seitenwänden 10b vorgesehen. In diesem Falle wird der Bremskörper 4 in diese Schale 10 eingegossen und zwar durch einen Hohlkern 11, der durch eine Oeffnung der einen Seitenwand der Schale 10 durchgreift. Es entsteht damit in rationeller Weise eine Bremssohle, deren Rücken den Bremskörper aussen mit einer Rippe umfasst, die in den Räumen 12 entsteht. Es verbleiben beim Giessen keine vorstehenden Stahlteile, wie bei der Ausführung gemäss Figur 2, die nachträglich entfernt werden müssten.

Es sind verschiedene Varianten möglich, wobei Massnahmen, die nur im Zusammenhang mit einer Ausführungsform beschrieben sind, bei der anderen entsprechend anwendbar sind. So kann der Rücken in allen Fällen durch eine zusätliche Stahleinlage verstärkt werden, oder der Bremskörper kann nach Belieben mit Quernuten unterteilt sein oder nicht. Die Schale gemäss Figur 3 kann niedriger ausgeführt werden, sodass ihre Ränder nicht bis an die Aussenseite des Bremskörpers reichen. Es ist aber auch eine Sache der Wahl der Giessparameter, wie stark die eingelegte Schale 10 aufgekohlt wird, um nachträglich die Bremseigenschaften der Bremssohle nicht ungünstig zu beeinflussen. Es können andere Gusslegierungen verwendet werden als oben erwähnt. Bei den oben beschriebenen Beispielen wird angenommen, es werde zuerst der Rücken und dann der Bremskörper gegossen. Man könnte aber auch umgekehrt vorgehen, in welchem Falle der Bremskörper vorzugsweise im Formunterteil und der Rücken im Formoberteil gegossen wird. Beide Teile können aber auch gleichzeitig gegossen werden.

Bei der Ausführung nach Figur 3 könnten eventuell die Schmalseiten der Schale 10 weggelassen werden.

Wie erwähnt, kann die Bremsklotzsohle mit Vorteil in Verbundguss hergestellt werden, indem zugleich oder in kurzem Abstand der Rücken und der Bremskörper gegossen wird. Dieses Vorgehen ist auch möglich und natürlich einfacher ohne Trennblech 5 bzw. Trennschale 10. In diesem Falle wird also in einer einfachen Form zuerst der Rücken mit geeignetem Material, z.B. Grauguss oder Sphäroguss gegossen und mit einer gewissen Verzögerung von beispielsweise 5 bis 10s, wird der Bremskörper direkt daraufgegossen. Es ist hierbei möglich, eine feste Verschmelzung oder Verschweissung der beiden Teile ohne wesentliche Vermischung zu erzielen. Es ist allerdings hierbei nicht möglich, dem Rücken die herkömmliche Form mit konkav gewölbter Innenseite zu erteilen, weil natürlich der Metallspiegel beim Giessen in die ungetrennte Form eben ist. Es hat sich aber gezeigt, dass dies kein Nachteil ist, selbst wenn der Rücken nicht ganz bis an die Schmalseiten des Formraumes bzw. des nachträglich gegossenen Bremskörpers reicht. Es wird hierbei z.B. ein Rücken aus Sphäroguss oder perlitischem Grauguss mit einer maximalen Dicke von etwa 12 mm gegossen, der in Längsrichtung nicht ganz zum Rand des Formraumes reicht. Dann wird in dieselbe Form der Bremskörper aus hoch-P-haltigem Gusseisen gegossen, wobei eine Verschmelzung und Verschweissung der beiden Gussteile ohne unzulässige Vermischung derselben erfolgt, da das zuerst gegossene Teil wegen der richtig gewählten Zeitstaffelung nur noch an der Trennfläche flüssig ist.

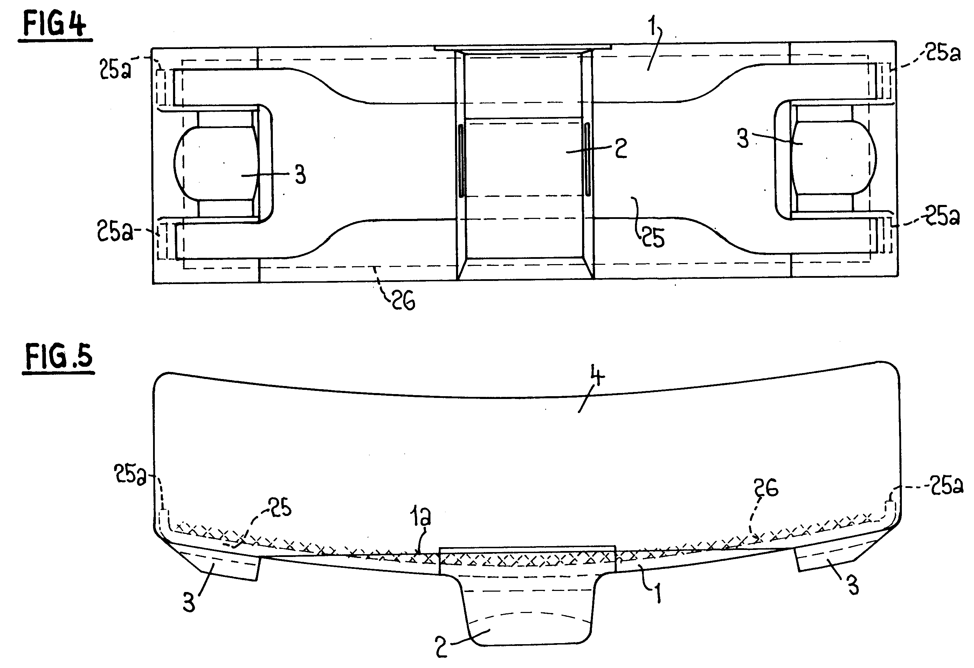

Die Figuren 4 und 5 zeigen eine derartige Ausführung, wobei entsprechende Teile gleich bezeichnet sind wie in den übrigen Figuren. Der Rücken 1 ist relativ dünn und kann kürzer sein als der Bremskörper 4. Dieser Rücken wird zuerst mit dosierter Menge gegossen und weist daher eine ebene Oberseite 1a auf. Der Bremskörper ist in der erwähnten Weise unmittelbar nach dem Guss des Rückens auf denselben gegossen und mit ihm verschweisst. Es könnte mit Vorteil auch umgekehrt der Bremskörper zuerst gegossen und dann der Rücken in derselben Form aufgegossen werden, in welchem Falle infolge der grösseren Masse des Bremskörpers die Abkühlung langsamer erfolgt und das Aufgiessen des Rückens mit etwas grösserer Verzögerung erfolgen könnte. Es ist eine Armierung bestehend aus einem Stahlblech 25 mit hochgebogenen Enden 25a und einem Gitter 26 vorgesehen, deren Mittelbereich hauptsächlich im Rücken und deren Endbereiche im Bremskörper liegen und damit eine gute Verbindung dieser Teile und hohe Festigkeit sicherstellen. Das Stahlblech 25 ist gemäss Fig. 4 in der Mitte verjüngt und an den Enden gegabelt. Die Nocken 3 bestehen aus dem Gusseisen des Bremskörpers 4 und weisen trotzdem für die auftretenden Beanspruchungen genügende Festigkeit auf. Wenn der Rücken aus Sphäroguss besteht, kann auf die Armierung auch ganz verzichtet werden.

## Patentansprüche

1. Bremsklotzsohle mit einem Rücken (1) zur Befestigung an einem Halter und einem mit dem Rücken verbundenen Bremskörper (4) aus Gusseisen mit hohem Reibungskoeffizienten, wobei auch der Rücken (1) ein Gusseisenteil ist, dadurch gekennzeichnet, dass der Bremskörper (4) und der Rücken (1) direkt oder indirekt miteinander verschweisst sind.

2. Bremssohle nach Anspruch 1, dadurch gekennzeichnet, dass zwischen dem Rücken (1) und dem Bremskörper (4) ein Stahlblech (5, 10a) liegt.

3. Bremsklotzsohle nach Anspruch 2, dadurch gekennzeichnet, dass das Stahlblech (5, 10a) mindestens teilweise aufgekohlt und mit den beiden Gussteilen (1, 4) verschweisst ist.

4. Bremsklotzsohle nach Anspruch 2, dadurch gekennzeichnet, dass ein flaches Stahlblech (5) oder eine offene Stahlschale (10) mit ihrem Boden (10a) zwischen Rücken (1) und Bremskörper (4) vorhanden ist.

5. Bremsklotzsohle nach einem der Ansprüche 1 bis 4, dadurch gekennzeichnet, dass der Rücken (1) aus Sphäroguss besteht.

6. Bremsklotzsohle nach Anspruch 2, dadurch gekennzeichnet, dass mit der Stahleinlage (9) beidseitig Armierungsgitter verbunden sind.

7. Bremsklotzsohle nach Anspruch 1, dadurch gekennzeichnet, dass der Bremskörper (4) und der Rücken (1) direkt miteinander verschweisst sind, wobei die Stossfläche zwischen den beiden Teilen im wesentlichen eben ist.

8. Bremsklotzsohle nach Anspruch 7, dadurch gekennzeichnet, dass der Rücken (1) kürzer ist als der Bremskörper, und dass eine Armierung, z.B. ein Blech und/oder ein Gitter eingegossen ist, deren Mittelbereich zur Hauptsache im Rücken und deren Endbereiche im Bremskörper liegen.

9. Verfahren zur Herstellung einer Bremsklotzsohle gemäss Anspruch 1, dadurch gekennzeichnet, dass der Rücken (1) und der Bremskörper (4) als Verbundguss in aufeinanderfolgenden oder gleichzeitigen Giessvorgängen in derselben Form gegossen werden.

10. Verfahren nach Anspruch 9, dadurch gekennzeichnet, dass zur Trennung der Form in zwei Giessräume für den Rücken (1) bzw. den Bremskörper (4) ein flaches oder kastenförmiges Stahlblech (5, 10) in die Form eingelegt wird.

## Claims

1. A brake shoe comprising a back (1) for its attachment to a holder and, connected to said back, a braking body (4) of cast iron having a high friction coefficient, the back (1) being a cast iron part as well, characterized in that the braking body (4) and the back (1) are directly or indirectly welded together.

2. Brake shoe according to claim 1, characterized in that a steel sheet (5, 10a) is disposed between the back (1) and the brake body (4).

3. Brake shoe according to claim 2, characterized in that the steel sheet (5, 10a) is at least partly carbonized and welded together with said two cast iron parts (1,4).

4. Brake shoe according to claim 2, characterized in that a flat steel sheet (5) or an open steel shell (10) is provided, the bottom (10a) of said shell extending between the back (1) and the braking body (4).

5. Brake shoe according to any one of claims 1 to 4, characterized in that the back (1) consists of nodular cast iron.

6. Brake shoe according to claim 2, characterized in that reinforcement grids are attached to the steel insert (9) on both sides.

7. Brake shoe according to claim 1, characterized in that the braking body (4) and the back (1) are directly welded together, the junction surface between the two parts being substantially flat.

8. Brake shoe according to claim 7, characterized in that the back (1) is shorter than the braking body, and that a reinforcement, e.g. a steel sheet and/or a grid is cast in whose central area extends mainly in the back and whose end portions extend in the braking body.

9. Method for the manufacture of a brake shoe according to claim 1, characterized in that the back (1) and the braking body (4) are poured as a composite casting in the same mold in consecutive or simultaneous casting operations.

**4**

10. Method according to claim 9, characterized in that a flat or box-shaped steel sheet (5, 10) is placed in the mold in order to divide the latter into two casting cavities, for the back and the braking body, respectively.

## Revendications

1. Semelle de freinage comprenant un dos (1) pour sa fixation à une retenue, et un élément de freinage (4) en fonte à coefficient de frottement élevé, le dos (1) étant également une pièce en fonte, caractérisée en ce que l'élément de freinage (4) et le dos (1) sont directement ou indirectement soudés ensemble.

2. Semelle de freinage selon la revendication 1, caractérisée en ce qu'une tôle d'acier (5, 10a) est disposée entre le dos (1) et l'élément de freinage (4).

3. Semelle de freinage selon la revendication 2, caractérisée en ce que la tôle d'acier (5, 10a) est au moins partiellement carbonisée et soudée aux deux pièces en fonte (1,4).

4. Semelle de freinage selon la revendication 2, caractérisée en ce qu'une tôle d'acier plate (5) ou une coque d'acier (10 ) ouverte est prévue dont le fond (10a) se trouve entre le dos (1) et l'élément de freinage (4).

5. Semelle de freinage selon l'une quelconque des revendications 1 à 4, caractérisée en ce que le dos (1) consiste en fonte sphérolitchique.

6. Semelle de freinage selon la revendication 2, caractérisée en ce que des treillis d'armature sont reliés à l'insertion d'acier sur les deux côtés.

7. Semelle de freinage selon la revendication 1, caractérisée en ce que l'élément de freinage (4) et le dos (1) sont directement soudés ensemble, la surface de jonction entre les deux pièces étant essentiellement plane.

8. Semelle de freinage selon la revendication 7, caractérisée en ce que le dos (1) est plus court que l'élément de freinage, et qu'une armature, par exemple une tôle et/ou un treillis, est encastrée dont la partie centrale est disposée principalement dans le dos et les parties extrêmes se trouvent dans l'élément de freinage.

9. Procédé pour la fabrication d'une semelle de freinage selon la revendication 1, caractérisé en ce que le dos (1) et l'élément de freinage (4) sont coulés dans le même moule en coulées successives ou simultanées.

10. Procédé selon la revendication 9, caractérisé en ce qu'une tôle (5, 10) plate ou en forme de caisson est introduite dans le moule pour le diviser en deux cavités de coulage pour le dos (1) et pour l'élément de freinage (4).

FIG.1

FIG. 2

EP 0 362 131 B1

FIG.3

FIG 4

FIG.5

EP 0 362 131 B1